# FASCICULE DE BREVET EUROPEEN

(11) **EP 3 116 068 B1**
(45) Date de publication et mention de la délivrance du brevet: **18.04.2018**
(21) Numéro de dépôt: 16177930.1
(22) Date de dépôt: 05.07.2016
(51) Int. Cl.: H01R 11/28, H01R 13/64, H01M 2/34, H02J 7/00, H01M 2/20

(54) **DISPOSITIF DE MISE EN SECURITÉ D'UNE BATTERIE ET PROCÉDÉ**
VORRICHTUNG ZUR SICHERUNG EINER BATTERIE, UND VERFAHREN
BATTERY SECURITY DEVICE AND METHOD

(30) Priorité: 07.07.2015 FR 1556417
(43) Date de publication de la demande: 11.01.2017
(73) Titulaire: SAFT, 93170 Bagnolet (FR)
(72) Inventeur: Narbonne, Alexandre, 33290 Blanquefort (FR); Dos Reis, Christophe, 33290 Blanquefort (FR)
(74) Mandataire: Hirsch & Associés

(56) Documents cités:
- EP-A1- 0 078 386
- WO-A2-2013/182589
- US-A1- 2013 177 790

## Description

### DOMAINE DE L'INVENTION

La présente invention concerne un dispositif de sécurité pour une batterie ou un ensemble de batteries. L'invention concerne également une batterie adaptée à être mise en sécurité au moyen d'un tel dispositif de sécurité, ainsi qu'un ensemble de telles batteries. L'invention concerne en outre un procédé de mise en sécurité d'un tel ensemble de batteries.

### ETAT DE LA TECHNIQUE

Il est connu des batteries conçues à partir d'éléments électrochimiques de type lithium-ion ou nickel-hydrure métallique destinées à servir de source d'alimentation de secours pour les réseaux de télécommunication basse tension. Ces batteries peuvent être disposées dans un bâti modulaire, encore appelé baie ou « rack ». Chaque baie peut contenir plusieurs batteries délivrant chacune 48 V. Un convertisseur de courant continu en courant alternatif (DC/AC) permet de convertir le courant continu généré par les batteries en un courant alternatif utilisable pour l'alimentation des systèmes électroniques des réseaux de télécommunication. On pourra se reporter au site www.saftbatteries.com qui donne de plus amples informations sur ce type de sources d'alimentation de secours, en particulier les systèmes batteries de la gamme Intensium.

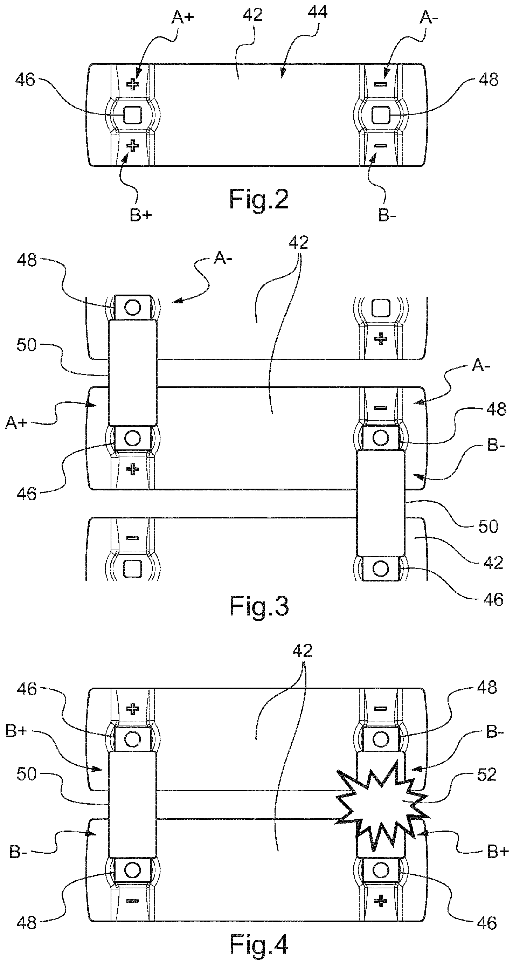

Une telle baie de batteries est représentée sur les figures la et 1b. Une baie 40 comporte une pluralité de batteries 42 identiques et installées les unes au-dessus des autres de sorte qu'une façade 44 de chaque batterie 42 est sensiblement disposée dans un même plan. En référence à la figure 2, chaque façade 44 comporte un accès à une borne électrique positive 46 et une borne électrique négative 48 d'une batterie 42. Les batteries 42 sont connectées entre elles au moyen de connecteurs électriques 50 de sorte que les connecteurs électriques 50 relient une borne électrique positive 46 d'une batterie 42 à une borne électrique négative 48 d'une autre batterie 42. En particulier, la borne électrique positive 46 d'une batterie 42 peut être connectée à un connecteur électrique 50 selon une première position de connexion A+ ou une deuxième position de connexion B+. De manière similaire, la borne électrique négative 48 d'une batterie 42 peut être connectée à un connecteur électrique 50 selon une première position de connexion A- ou une deuxième position de connexion B-. Les premières positions de connexion A+ et A- sont situées d'un même côté de la batterie 42 et les deuxièmes positions de connexion B+ et B- sont situées d'un même autre côté de la batterie 42.

Les batteries 42 sont symétriques de sorte qu'elles peuvent être utilisées de manière réversible. En d'autres termes, les batteries 42 peuvent être positionnées dans la baie 40 de sorte que les bornes électriques positive 46 et négative 48 sont respectivement situées soit à droite et à gauche soit à gauche à droite de la batterie 42.

Pour réduire la distance entre deux bornes électriques destinées à être connectées ensemble par un connecteur électrique 50 et donc faciliter la connexion des batteries 42 entre elles, les batteries 42 sont installées tête-bêche, tel que visible sur la figure 3. En d'autres termes, les batteries 42 sont disposées dans la baie 40 de sorte qu'une borne électrique positive 46 d'une première batterie 42 est disposée en regard de, ou alignée suivant une direction s'étendant de haut en bas de la baie 40 par rapport à, une borne électrique négative 48 d'une deuxième batterie 42 disposée au-dessus ou au-dessous de la première batterie 42. En particulier, la figure 3 représente un schéma de la connexion de trois batteries 42 connectées entre elles par deux connecteurs électriques 50 pour permettre le fonctionnement de la baie 40.

Toutefois, un inconvénient majeur des batteries 42 est qu'un connecteur électrique 50 peut être disposé dans une position non souhaitée lors du montage des batteries 42 et entrainer un court-circuit dans le circuit électrique reliant les batteries 42 risquant d'endommager les batteries 42. Une telle position de connexion non souhaitée d'un connecteur électrique 50 est représentée sur la figure 4 où un connecteur électrique 50 est connecté entre les deuxièmes positions de connexion B- et B+ de deux batteries 42 alors qu'un autre connecteur électrique 50 est simultanément connecté dans les deuxièmes positions de connexion B+ et B- de ces deux mêmes batteries 42. Une alimentation en courant électrique du circuit reliant les batteries 42 entrainerait un court-circuit symbolisé par 52.

Une solution existante pour limiter les risques de confusion consiste à fournir à un opérateur chargé de connecter les batteries 42 entre elles un schéma de montage des batteries 42 ou un masque de montage. Toutefois, le risque de confusion du positionnement d'un connecteur électrique 50 ainsi que le temps de montage des connecteurs électriques 50 sont trop élevés.

Il est également connu de l'homme de l'art que les erreurs de connexion de dispositifs électriques peuvent être évitées au moyen de dispositifs de connexion détrompés. On entend par le terme « dispositif de connexion détrompé », un dispositif de connexion comportant des moyens permettant d'empêcher la connexion du dispositif de connexion dans une position de connexion non souhaitée. Pour permettre leur détrompage, de tels dispositifs de connexion comprennent des organes mécaniques tels que des doigts de forme ou de position, des pions, des encoches ou bien une combinaison de ceux-ci. Toutefois, ces dispositifs de connexion sont spécifiques et couteux. De plus, une telle solution de détrompage des positions de connexion ne permet pas d'éviter les erreurs de connexion si un autre type de dispositif de connexion est utilisé, notamment un dispositif de connexion non détrompé.

Le document WO-A2-2013/182589 décrit un dispositif comprenant une pluralité de batteries connectées entre elles via une barre de connexion (appelée « Bus bar ») comprenant des éléments de connexion dont la structure est spécifiquement configurée pour éviter un mauvais montage des batteries entre elles. En particulier, chaque élément de connexion est réalisé pour coopérer, à une extrémité, avec un pôle d'une batterie ou d'un élément de fin de circuit et, à une autre extrémité, avec un autre élément de connexion de sorte que les éléments de connexion se chevauchent une fois la barre de connexion installée sur les batteries. Toutefois, un tel dispositif nécessite l'utilisation d'éléments de connexion complexes et coûteux spécifiquement adaptés au type de batteries utilisées dans le dispositif. De plus, le montage des éléments de connexion pour connecter les batteries entre elles est rendu difficile, augmentant le temps de montage du dispositif. Le document US 2013 177 790 A1 décrit un dispositif correspondant au préambule de la revendication 1. Le but de la présente invention est de fournir un dispositif permettant de résoudre au moins partiellement les inconvénients précités.

Plus particulièrement, l'invention vise à permettre une mise en connexion simple et rapide d'une pluralité de batteries entre elles, notamment d'un ensemble de batteries installées sous la forme d'une baie, tout en réduisant les risques liés à une connexion inadaptée des batteries entre elles.

A cette fin, la présente invention propose un dispositif de sécurité pour une batterie comprenant une borne électrique positive et une borne électrique négative adaptées à être connectées chacune à un connecteur électrique, la batterie étant adaptée pour qu'un connecteur électrique puisse être connecté à chacune des bornes électriques positive et négative selon une première ou une deuxième position de connexion, le dispositif de sécurité comprenant un organe de sécurité adapté à être sélectivement positionné dans une première position de sécurité dans laquelle l'organe de sécurité empêche la connexion d'un connecteur électrique dans la deuxième position de connexion de la borne électrique positive et dans la première position de connexion de la borne électrique négative ou une deuxième position de sécurité dans laquelle l'organe de sécurité empêche la connexion d'un connecteur électrique dans la première position de connexion de la borne électrique positive et dans la deuxième position de connexion de la borne électrique négative.

Un tel dispositif de sécurité permet de limiter l'accès aux bornes électriques positive et négative de sorte que seules les positions de connexion souhaitées sont accessibles. Le dispositif de sécurité constitue donc un obstacle mécanique empêchant un opérateur de confondre la position de connexion souhaitée. Ceci est particulièrement avantageux lorsque la batterie est utilisée dans une baie dans laquelle une pluralité de batteries sont installées les unes sur les autres et connectées entre elles en série dans un même circuit électrique. Dans une telle baie, le dispositif de sécurité permet d'éviter tout risque de confusion d'un opérateur chargé de connecter les batteries entre elles au moyen de connecteurs électriques étant donné que l'accès aux positions de connexion pouvant entrainer un court-circuit est obstrué.

Le dispositif de sécurité permet également de réduire le temps de montage des connecteurs électriques sur batteries par rapport à des solutions existante où seuls des schémas de montage ou des masques de montage permettent de connecter correctement les batteries entre elles. En effet, seules les positions de connexion dans lesquelles les connecteurs électriques sont à connecter sont accessibles.

Les avantages cités ci-dessus bénéficient à la mise en connexion des batteries par un opérateur lors de plusieurs étapes de la vie de la batterie, notamment la fabrication, le dépannage par un professionnel ou par un client destinataire des batteries.

De plus, l'intégration du dispositif de sécurité au niveau du module de batterie permet de ne pas contraindre un utilisateur d'utiliser un type spécifique de connecteur électrique. En effet, tout connecteur électrique adapté à être connecté aux bornes positive et négative peut être utilisé.

Suivant un mode de réalisation, l'organe de sécurité est adapté à être déplacé en translation pour être positionné dans la première ou la deuxième position de sécurité.

Suivant un autre mode de réalisation, l'organe de sécurité comprend :
- un premier bras mobile entre les bornes électriques positive et négative adapté à empêcher la connexion d'un connecteur électrique dans :
   - la première position de connexion de la borne électrique positive et à permettre simultanément l'accès à la première position de connexion de la borne électrique négative ; ou
   - la première position de connexion de la borne négative et à permettre simultanément l'accès à la première position de connexion de la borne électrique positive ; et
- un deuxième bras mobile entre les bornes électriques positive et négative adapté à empêcher la connexion d'un connecteur électrique dans :
   - la deuxième position de connexion de la borne électrique positive et à permettre simultanément l'accès à la deuxième position de connexion de la borne électrique négative ; ou
   - la deuxième position de connexion de la borne électrique négative et à permettre simultanément l'accès à la deuxième position de connexion de la borne électrique positive.

Suivant un autre mode de réalisation, l'organe de sécurité comprend également un bras de liaison solidaire de chacun des premier et deuxième bras de sorte que lorsque l'un des premier et deuxième bras mobiles translate dans un sens, l'autre translate en sens inverse.

Suivant un autre mode de réalisation, l'organe de sécurité est adapté à être déplacé en rotation pour être positionné dans la première ou la deuxième position de sécurité.

Suivant un autre mode de réalisation, l'organe de sécurité comprend
- un premier élément mobile entre les première et deuxième positions de connexion de la borne électrique positive adapté à empêcher la connexion d'un connecteur électrique dans
   - la première position de connexion de la borne électrique positive et à permettre simultanément l'accès à la deuxième position de connexion de la borne électrique positive ; ou
   - la deuxième position de connexion de la borne électrique positive et à permettre simultanément l'accès à la première position de connexion de la borne électrique positive ; et
- un deuxième élément mobile entre les première et deuxième positions de connexion de la borne électrique négative adapté à empêcher la connexion d'un connecteur électrique dans:
   - la première position de connexion de la borne électrique négative et à permettre simultanément l'accès à la deuxième position de connexion de la borne électrique négative ; ou
   - la deuxième position de connexion de la borne électrique négative et à permettre simultanément l'accès à la première position de connexion de la borne électrique négative..

Suivant un autre mode de réalisation, les premier et deuxième éléments mobiles sont formés par une roue dentée mobile autour de son axe comportant un évidement adapté à être positionné au niveau de l'une des positions de connexion pour permettre son accès à un connecteur électrique.

Suivant un autre mode de réalisation, l'organe de sécurité comprend également un élément de liaison entre les premier et deuxième éléments mobiles, l'élément de liaison étant formé par une roue dentée mobile autour de son axe adaptée à coopérer par engrènement avec les premier et deuxième éléments mobiles de sorte qu'une rotation dans un sens de rotation de l'un des premier et deuxième éléments mobiles entraine une rotation en sens inverse de l'autre élément mobile.

Suivant un autre mode de réalisation, le dispositif de sécurité est adapté à être intégré dans une paroi de connexion de batterie apte à recouvrir les bornes électriques positive et négative de la batterie.

Suivant un autre mode de réalisation, l'organe de sécurité est monobloc et comporte au moins deux évidements permettant un accès simultané à un connecteur électrique soit à la première position de connexion de la borne électrique positive et la deuxième position de connexion de la borne électrique négative soit à la deuxième position de connexion de la borne électrique positive et la première position de connexion de la borne électrique négative. Il est également proposé une batterie comprenant une borne électrique positive et une borne électrique négative adaptées à être connectées chacune à un connecteur électrique, la batterie étant adaptée pour qu'un connecteur électrique puisse être connecté à chacune des bornes électriques positive et négative selon une première ou une deuxième position de connexion, la batterie comprenant également un dispositif de sécurité tel que proposé ci-dessus.

Il est également proposé un ensemble de batteries telles que proposées ci-dessus connectées entre elles pour former un circuit en série, dans lequel les batteries sont connectées les unes aux autres uniquement par un seul connecteur électrique, les positions de connexion des bornes électriques non connectées étant obstruées par un organe de sécurité.

Il est en outre proposé un procédé de mise en sécurité d'un ensemble de batteries tel que proposé ci-dessus, comprenant les étapes consistant à déterminer les positions de connexion aux bornes négative et positive dont la connexion à un connecteur électrique est à empêcher parmi les premières et deuxièmes positions de connexion des bornes électriques négative et positive d'une batterie et positionner l'organe de sécurité selon la première ou la deuxième position de sécurité en fonction des positions de connexion déterminées.

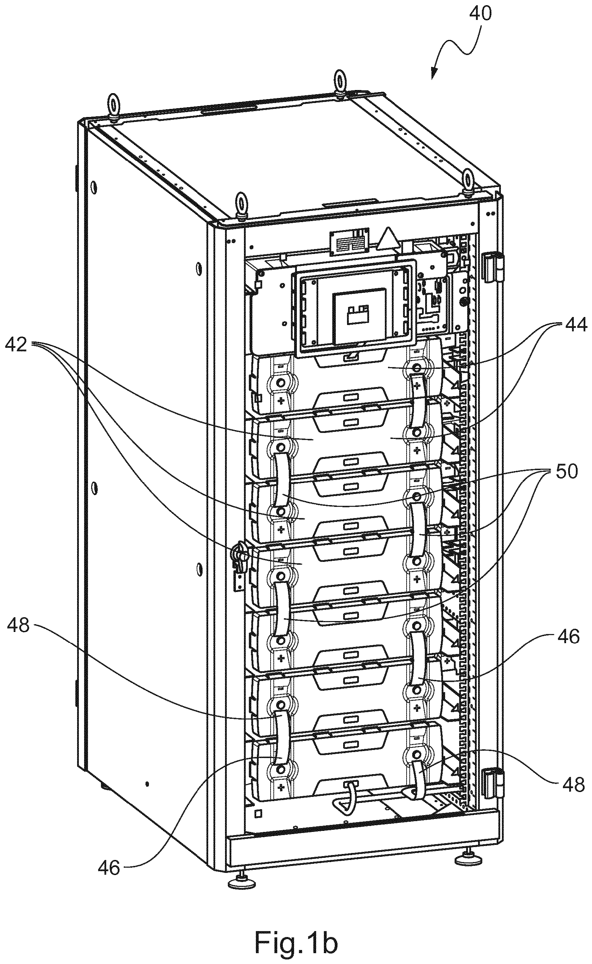

D'autres caractéristiques et avantages de l'invention apparaîtront à la lecture de la description qui suit de plusieurs modes de réalisation de l'invention, donnée à titre d'exemple et en référence au dessin annexé.
La figure la représente une vue de face d'une baie de batteries connectées entre elles au moyen de connecteurs électriques. La figure 1b représente une vue en perspective d'une baie de batteries.
La figure 2 représente un schéma d'une façade de batterie selon la figure la.
Les figures 3 et 4 représentent un schéma de plusieurs batteries de la baie selon la figure la, connectées entre elles dans une position de fonctionnement et une position de défaillance de ces batteries, respectivement.
Les figures 5 et 6 représentent une vue en perspective l'endroit et l'envers d'une paroi de connexion d'une batterie comprenant un dispositif de sécurité.
La figure 7 représente un schéma d'un autre mode de réalisation du dispositif de sécurité des figures 5 et 6.

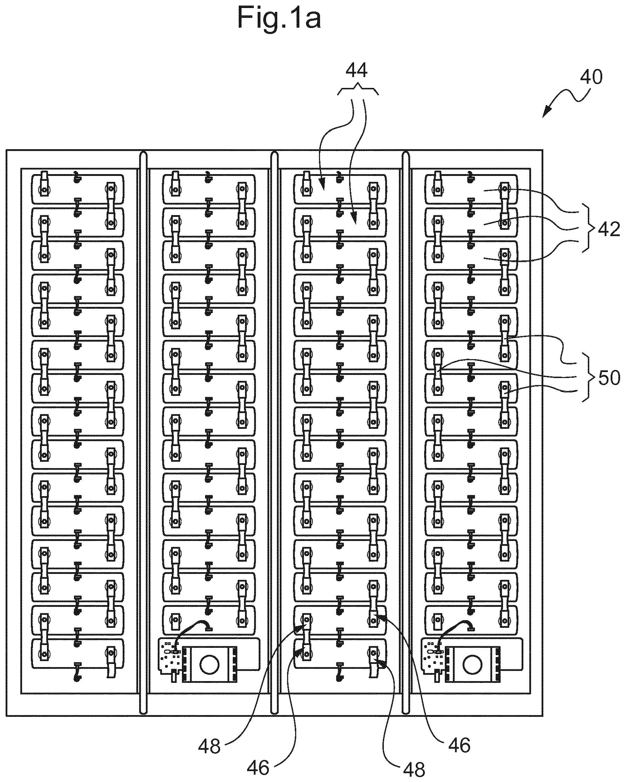

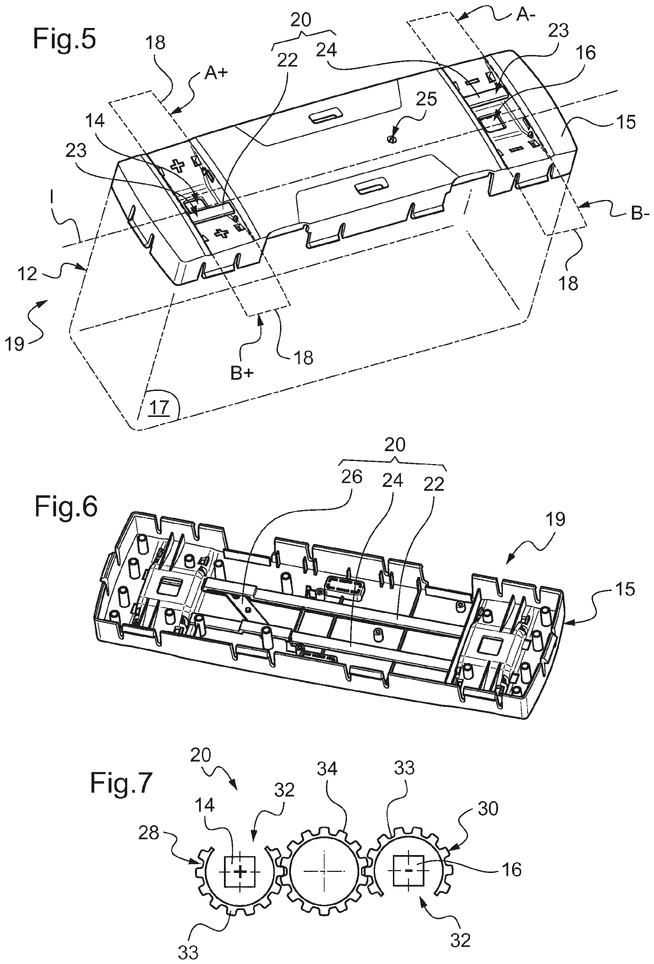

En référence à la figure 5, il est proposé une batterie 12 destinée à être utilisée dans une baie 40 représentée en figure 1a en remplacement des batteries 42. De plus, la batterie 12 est destinée à être connectée selon le montage de connexion représenté en figure 3 en remplacement des batteries 42.

La batterie 12 comprend, au niveau d'une paroi de connexion 15, une borne électrique positive 14 et une borne électrique négative 16. Chacune des bornes électriques positive 14 et négative 16 est adaptée à être connectée à un connecteur électrique 18 pour relier la batterie 12 à un circuit électrique ou à une autre batterie 12 comprise dans un même circuit électrique.

Pour faciliter l'accès aux bornes électriques positive 14 et négative 16, la batterie 12 est adaptée de sorte que le connecteur électrique 18 peut être connecté à chacune des bornes électriques positive 14 et négative 16 selon deux positions de connexion. Lorsque la batterie 12 est destinée à être utilisée dans une baie 40 telle représentée en figure la, ces deux positions de connexion correspondent à la position d'un connecteur électrique 18 reliant la batterie 12 à une autre batterie 12 disposée au-dessous ou au-dessus de la batterie 12.

De plus, la batterie 12 est réalisée de manière symétrique par rapport à un axe de symétrie I suivant lequel s'étend la paroi de connexion 15 pour permettre une utilisation réversible de la batterie 12, par exemple dans une baie 40 telle que représentée sur la figure la. On entend par réversible le fait de pouvoir utiliser la batterie 12 soit dans une position où une paroi inférieure 17 de la batterie 12 est sensiblement orientée vers le bas de la baie 40 soit dans une position où la paroi inférieure 17 est sensiblement orientée vers le haut de la baie 40. En d'autres termes, lorsque l'on observe la paroi de connexion 15 de la batterie 12, la batterie 12 peut être utilisée de sorte que la borne électrique positive 14 est disposée à gauche de la batterie 12, la borne électrique négative 16 étant donc disposée à droite de la batterie 12, ou bien, inversement, être utilisée de sorte que la borne électrique positive 14 est disposée à droite de la batterie 12, la borne électrique négative 16 étant disposée à gauche de la batterie 12. La réversibilité de la batterie 12 permet, notamment dans une baie 40, de disposer les batteries 12 tête-bêche, c'est-à-dire que la borne électrique positive 14 d'une première batterie 12 est disposée dans un même alignement vertical d'une borne électrique négative 16 d'une deuxième batterie 12 disposée au-dessus ou au-dessous de la première batterie 12.

En outre, un dispositif de sécurité 19 est installé au niveau de la paroi de connexion 15 de la batterie 12. Le dispositif de sécurité 19 comprend un organe de sécurité 20 adapté à être sélectivement positionné soit dans une première position de sécurité soit dans une deuxième position de sécurité.

La première position de sécurité correspond à une position dans laquelle l'organe de sécurité 20 empêche la connexion d'un connecteur électrique 18 dans la deuxième position de connexion B+ de la borne électrique positive 14 et dans la première position de connexion A- de la borne électrique négative 16. En d'autres termes, lorsque l'organe de sécurité 20 est disposé dans la première position de sécurité, seules la première position de connexion A+ de la borne électrique positive 14 et la deuxième position de connexion B- de la borne électrique négative 16 sont accessibles à un connecteur électrique 18.

La deuxième position de sécurité correspond à une position dans laquelle l'organe de sécurité 20 empêche la connexion d'un connecteur électrique 18 dans la première position de connexion A+ de la borne électrique positive 14 et dans la deuxième position de connexion B- de la borne électrique négative 16. En d'autres termes, lorsque l'organe de sécurité 20 est disposé dans la deuxième position de sécurité, seules la deuxième position de connexion B+ de la borne électrique positive 14 et la première position de connexion A- de la borne électrique négative 16 sont accessibles à un connecteur électrique 18.

Le dispositif de sécurité 19 permet de limiter l'accès aux bornes électriques positive 14 et négative 16 de sorte que seules les positions de connexion souhaitées sont accessibles. Ceci est particulièrement avantageux lorsque la batterie 12 est utilisée dans une baie 40 selon la figure la dans laquelle une pluralité de batteries 12 comprenant chacune un dispositif de sécurité 19 sont installées les unes sur les autres et connectées entre elles en série dans un même circuit électrique. Dans une telle baie 40, les dispositifs de sécurité 19 des batteries 12 permettent d'éviter tout risque de confusion d'un opérateur chargé de connecter les batteries 12 entre elles au moyen de connecteurs électriques étant donné que l'accès aux positions de connexion pouvant entrainer un court-circuit est obstrué.

Pour permettre à l'organe de sécurité 20 d'être disposé selon la première ou la deuxième position de sécurité, l'organe de sécurité 20 comprend un premier 22 et un deuxième 24 bras s'étendant entre les bornes électriques positive 14 et négative 16 et étant mobiles en translation, suivant une direction de translation s'étendant sensiblement le long de l'axe de symétrie I, entre les bornes électriques positive 14 et négative 16. En particulier, chacun des premier 22 et deuxième 24 bras comporte une paire de portions d'extrémité 23 adaptées à empêcher respectivement la connexion d'un connecteur électrique 18 soit de l'une des premières positions de connexion A+ et A- soit de l'une des deuxième positions de connexion B+ et B- des bornes électriques positive 14 et négative 16. En d'autres termes, le premier bras 22 est adapté à être translaté le long de la direction de translation de sorte que l'une parmi la paire de portions d'extrémité 23 du premier bras 22 est disposée soit au niveau de la borne électrique positive 14 soit au niveau de la borne électrique négative 16. De manière similaire, le deuxième bras 24 est adapté à être translaté le long de la direction de translation de sorte que l'une parmi la paire de portions d'extrémité 23 du deuxième bras 24 est disposée soit au niveau de la borne électrique positive 14 soit au niveau de la borne électrique négative 16.

De plus, l'organe de sécurité 20 est configuré de sorte que lorsque l'un des premier 22 et deuxième 24 bras translate dans un sens, l'autre bras translate en sens inverse. Ainsi, l'organe de sécurité 20 ne peut être disposé que dans la première ou la deuxième positions de sécurité.

Pour permettre une translation simultanée et en sens inverse des premier 22 et deuxième 24 bras, l'organe de sécurité 20 comprend également un bras de liaison 26 solidaire de chacun des premier 22 et deuxième 24 bras. Le bras de liaison 26 est mobile en rotation autour d'un axe de rotation s'étendant transversalement à la direction de translation. Pour réaliser la liaison entre le bras de liaison 26 et les premier 22 et deuxième 24 bras, un pion (non visible) est formé sur chacun des premier 22 et deuxième 24 bras pour coopérer avec une ouverture formée au niveau de chaque extrémité du bras de liaison 26. Pour faciliter la translation simultanée des premier 22 et deuxième 24 bras, l'ouverture formée au niveau de chaque extrémité du bras de liaison 26 est un trou oblong s'étendant suivant une direction passant par l'axe de rotation du bras de liaison 26.

De plus, pour disposer sélectivement l'organe de sécurité 20 dans la première ou la deuxième position de sécurité, l'organe de sécurité 20 comporte un élément d'actionnement 25 du bras de liaison 26 de sorte que la rotation de l'élément d'actionnement 25 entraine la rotation du bras de liaison 26. Pour pouvoir être actionné, l'élément d'actionnement 25 est accessible au niveau du côté opposé de la paroi de connexion 15 au côté où est disposé le bras de liaison 26. L'élément d'actionnement 25 est un pion solidaire ou monobloc du bras de liaison 26 s'étendant selon et au niveau de l'axe de rotation du bras de liaison 26. De manière alternative à une extension au niveau de l'axe de rotation du bras de liaison 26, l'élément d'actionnement 25 peut être décentré par rapport à l'axe de rotation du bras de liaison 26 et être accessible au travers d'un ouverture circulaire formée dans la paroi de connexion 15 et s'étendant autour de l'axe de rotation du bras de liaison 26.

De manière alternative au mode de réalisation de l'organe de sécurité 20 représenté en figures 5 et 6, l'organe de sécurité 20 peut être formé tel que représenté en figure 7.

En référence à la figure 7, l'organe de sécurité 20 comporte une première 28 et une deuxième 30 roues dentées disposées respectivement au niveau des bornes électriques positive 14 et négative 16. En particulier, chacune des première 28 et deuxième 30 roues dentées est disposée autour de l'une des bornes électriques positive 14 et négative 16.

La première roue dentée 28 est adaptée à empêcher la connexion d'un connecteur électrique 18 dans l'une des première A+ et deuxième B+ positions de connexion de la borne électrique positive 14 et à permettre simultanément l'accès à l'autre des première A+ et deuxième B+ positions de connexion.

De manière similaire à la première roue dentée 28, la deuxième roue dentée 30 est adaptée à empêcher la connexion d'un connecteur électrique 18 dans l'une des première A- et deuxième B- positions de connexion de la borne électrique négative 16 et à permettre simultanément l'accès à l'autre des première A- et deuxième B-positions de connexion.

Pour permettre d'empêcher l'accès d'un connecteur électrique 18 à l'une ou l'autre des premières A+ et A- ou deuxièmes B+ et B- positions de connexion, les première 28 et deuxième 30 roues dentées comportent chacune une portion d'obturation 33 apte à empêcher l'accès d'un connecteur électrique 18 à l'une des premières A+ et A- ou à l'une des deuxièmes B+ et B- positions de connexion des bornes électriques positive 14 et négative 16.

Pour permettre l'accès d'un connecteur électrique 18 aux positions de connexion souhaitées, un évidement 32 est formé dans chacune des première 28 et deuxième 30 roues dentées pour permettre un accès d'un connecteur électrique 18 à celle des premières A+ et A- ou à celle des deuxièmes B+ et B- positions de connexion dont l'accès n'est pas obstrué. En particulier, l'évidement 32 est formé à l'opposé de la portion d'obturation 33 par rapport à la roue dentée correspondante de sorte qu'une rotation d'un angle de 180° de l'une des première 28 et deuxième 30 roues dentées permet de passer d'une position où la première position de connexion A+ ou A-correspondante est accessible à une position où la deuxième position de connexion B+ ou B- correspondante est accessible.

De plus, les première 28 et deuxième 30 roues dentées sont montées en sens inverse pour permettre à l'organe de sécurité 20 d'être positionné dans la première ou deuxième position de sécurité. En d'autres termes, lorsque l'évidement 32 de la première roue dentée 28 permet l'accès à la première position de connexion A+ de la borne électrique positive 14, l'évidement 32 de la deuxième roue dentée 30 permet l'accès à la deuxième position de connexion B- de la borne électrique négative 16. De manière similaire, lorsque l'évidement 32 de la première roue dentée 28 permet l'accès à la deuxième position de connexion B+ de la borne électrique positive 14, l'évidement 32 de la deuxième roue dentée 30 permet l'accès à la première position de connexion A- de la borne électrique négative 16.

Pour déplacer simultanément les première 28 et deuxième 30 roues dentées, l'organe de sécurité 20 comprend également une roue dentée de liaison 34 apte à coopérer par engrènement avec chacune des première 28 et deuxième 30 roues dentées de sorte qu'une rotation dans un sens de rotation déterminé de l'une des première 28 et deuxième 30 roues dentées entraine une rotation en sens inverse de l'autre roue dentée.

Par ailleurs, il est également proposé un procédé de mise en sécurité d'un ensemble de batteries 12 installées dans une baie 40 selon la figure la. Le procédé de mise en sécurité comprend une étape consistant à déterminer les positions de connexion aux bornes électriques négative 16 et positive 14 dont la connexion à un connecteur électrique 18 est à empêcher parmi les premières A+ et A- et deuxièmes B+ et B- positions de connexion des bornes électriques négative 16 et positive 14 d'une batterie 12. Le procédé comporte également une étape consistant à positionner l'organe de sécurité 20 selon la première ou la deuxième position de sécurité en fonction des positions de connexion A+, A-, B+ et/ou B- déterminées.

Suivant un autre mode de réalisation, l'organe de sécurité 20 comprend une pièce unique, c'est-à-dire monobloc, reliant l'ensemble des premières A+ et A- et deuxièmes B+ et B- positions d'accès aux bornes électriques positive 14 et négative 16. Pour permettre à l'organe de sécurité 20 d'être disposé dans la première ou la deuxième positions de sécurité, au moins deux évidements sont formées dans l'organe de sécurité pour permettre un accès simultané à un connecteur électrique 50 soit à la première position de connexion A+ de la borne électrique positive 14 et la deuxième position de connexion B- de la borne électrique négative 16 soit à la deuxième position de connexion B+ de la borne électrique positive 14 et la première position de connexion A- de la borne électrique négative 16. Selon une variante, l'organe de sécurité 20 monobloc peut être souple et formé par un ruban reliant les premières A+ et A- et deuxièmes B+ et B- positions de connexion des bornes électriques positive 14 et négative 16.

Bien entendu, la présente invention n'est pas limitée aux exemples et au mode de réalisation décrits et représentés, mais elle est susceptible de nombreuses variantes accessibles à l'homme de l'art.

De manière alternative, le dispositif de sécurité 19 peut être utilisé sur une batterie 12 ayant des bornes électriques positive 14 et négative 16 disposées sur des parois différentes de la batterie 12 ou bien sur une même paroi de la batterie 12 mais sur une paroi différente de la paroi disposée en façade d'une baie 40 selon la figure la. De plus le dispositif de sécurité 19 peut être utilisé sur une batterie 12 dont les positions de connexion aux bornes électriques positive 14 et négative 16 sont orientées dans une autre direction que la direction s'étendant de haut en bas tel que représenté sur la figure la sur laquelle les bornes électriques des batteries 12 sont alignées de haut en bas.

Par ailleurs, le bras de liaison 26 d'un mode de réalisation de l'organe de sécurité 20 peut être remplacé par tout élément permettant de déplacer simultanément et en sens inverse les premier 22 et deuxième 24 bras, comme par exemple une roue dentée engrenant avec une portion dentée rectiligne formée sur chaque bras pour réaliser un système de double crémaillère. De manière similaire, la roue dentée de liaison 34 d'un mode de réalisation de l'organe de sécurité 20 peut être remplacée par tout élément permettant de déplacer en rotation simultanément et en sens inverse les première 28 et deuxième 30 roues dentées, comme par exemple un ensemble bielle et manivelle solidaire de chacune des première 28 et deuxième 30 roues dentées, des pivots, des cames, des culbuteurs ou bien une lame souple.

Par ailleurs, le dispositif de sécurité 19 peut être utilisé sur une batterie comportant plus de deux bornes électriques, par exemple quatre bornes électriques.

## Revendications

1. Dispositif de sécurité (19) pour une batterie (12) comprenant une borne électrique positive (14) et une borne électrique négative (16) adaptées à être connectées chacune à un connecteur électrique (18), la batterie (12) étant adaptée pour qu'un connecteur électrique (18) puisse être connecté à chacune des bornes électriques positive (14) et négative (16) selon une première (A+, A-) ou une deuxième (B+, B-) position de connexion, le dispositif de sécurité (19) étant **caractérisé en ce qu'**il comprend un organe de sécurité (20) adapté à être sélectivement positionné dans :
- une première position de sécurité dans laquelle l'organe de sécurité (20) empêche la connexion d'un connecteur électrique (18) dans la deuxième position de connexion (B+) de la borne électrique positive (14) et dans la première position de connexion (A-) de la borne électrique négative (16) ; ou
- une deuxième position de sécurité dans laquelle l'organe de sécurité (20) empêche la connexion d'un connecteur électrique (18) dans la première position de connexion (A+) de la borne électrique positive (14) et dans la deuxième position de connexion (B-) de la borne électrique négative (16).

2. Dispositif de sécurité (19) selon la revendication 1, dans lequel l'organe de sécurité (20) est adapté à être déplacé en translation pour être positionné dans la première ou la deuxième position de sécurité.

3. Dispositif de sécurité (19) selon la revendication 2, dans lequel l'organe de sécurité (20) comprend :
- un premier bras (22) mobile entre les bornes électriques positive (14) et négative (16) adapté à empêcher la connexion d'un connecteur électrique (18) dans :
• la première position de connexion (A+) de la borne électrique positive (14) et à permettre simultanément l'accès à la première position de connexion (A-) de la borne électrique négative (16) ; ou
• la première position de connexion (A-) de la borne négative (16) et à permettre simultanément l'accès à la première position de connexion (A+) de la borne électrique positive (14) ; et
- un deuxième bras (24) mobile entre les bornes électriques positive (14) et négative (16) adapté à empêcher la connexion d'un connecteur électrique (18) dans :
• la deuxième position de connexion (B+) de la borne électrique positive (14) et à permettre simultanément l'accès à la deuxième position de connexion (B-) de la borne électrique négative (16) ; ou
• la deuxième position de connexion (B-) de la borne électrique négative (16) et à permettre simultanément l'accès à la deuxième position de connexion (B+) de la borne électrique positive (14).

4. Dispositif de sécurité (19) selon la revendication 3, dans lequel l'organe de sécurité (20) comprend également un bras de liaison (26) solidaire de chacun des premier (22) et deuxième (24) bras de sorte que lorsque l'un des premier (22) et deuxième (24) bras translate dans un sens, l'autre translate en sens inverse.

5. Dispositif de sécurité (19) selon la revendication 1, dans lequel l'organe de sécurité (20) est adapté à être déplacé en rotation pour être positionné dans la première ou la deuxième position de sécurité.

6. Dispositif de sécurité (19) selon la revendication 5, dans lequel l'organe de sécurité (20) comprend :
- un premier élément mobile (28) entre les première (A+) et deuxième (B+) positions de connexion de la borne électrique positive (14) adapté à empêcher la connexion d'un connecteur électrique (18) dans :
• la première position de connexion (A+) de la borne électrique positive (14) et à permettre simultanément l'accès à la deuxième position de connexion (B+) de la borne électrique positive (14) ; ou
• la deuxième position de connexion (B+) de la borne électrique positive (14) et à permettre simultanément l'accès à la première position de connexion (A+) de la borne électrique positive (14) ; et
- un deuxième élément mobile (30) entre les première (A-) et deuxième (B-) positions de connexion de la borne électrique négative (16) adapté à empêcher la connexion d'un connecteur électrique (18) dans:
• la première position de connexion (A-) de la borne électrique négative (16) et à permettre simultanément l'accès à la deuxième position de connexion (B-) de la borne électrique négative (16) ; ou
• la deuxième position de connexion (B-) de la borne électrique négative (16) et à permettre simultanément l'accès à la première position de connexion (A-) de la borne électrique négative (16).

7. Dispositif de sécurité (19) selon la revendication 6, dans lequel les premier (28) et deuxième (30) éléments mobiles sont formés par une roue dentée mobile autour de son axe comportant un évidemment (32) adapté à être positionné au niveau de l'une des premières (A+, A-) et deuxièmes (B+, B-) positions de connexion pour permettre son accès à un connecteur électrique (18).

8. Dispositif de sécurité (19) selon la revendication 7, dans lequel l'organe de sécurité (20) comprend également un élément de liaison (34) entre les premier (28) et deuxième (30) éléments mobiles, l'élément de liaison (34) étant formé par une roue dentée mobile autour de son axe adaptée à coopérer par engrènement avec les premier (28) et deuxième (30) éléments mobiles de sorte qu'une rotation dans un sens de rotation de l'un des premier (28) et deuxième (30) éléments mobiles entraine une rotation en sens inverse de l'autre élément mobile.

9. Dispositif de sécurité (19) selon l'une quelconque des revendications précédentes, lequel est adapté à être intégré dans une paroi de connexion (15) de batterie apte à recouvrir les bornes électriques positive (14) et négative (16) de la batterie (12).

10. Dispositif de sécurité (19) selon l'une des revendications 2, 5 ou 9, dans lequel l'organe de sécurité (20) est monobloc et comporte au moins deux évidements permettant un accès simultané à un connecteur électrique (50) :
- soit à la première position de connexion (A+) de la borne électrique positive (14) et la deuxième position de connexion (B-) de la borne électrique négative (16) ;
- soit à la deuxième position de connexion (B+) de la borne électrique positive (14) et la première position de connexion (A-) de la borne électrique négative (16).

11. Batterie (12) comprenant une borne électrique positive (14) et une borne électrique négative (16) adaptées à être connectées chacune à un connecteur électrique (18), la batterie (12) étant adaptée pour qu'un connecteur électrique (18) puisse être connecté à chacune des bornes électriques positive (14) et négative (16) selon une première (A+, A-) ou une deuxième (B+, B-) position de connexion, la batterie comprenant également un dispositif de sécurité (19) selon l'une quelconque des revendications précédentes.

12. Ensemble de batteries (12) selon la revendication 11 connectées entre elles pour former un circuit en série, dans lequel les batteries sont connectées les unes aux autres uniquement par un seul connecteur électrique (18), les premières (A+, A-) et deuxièmes (B+, B-) positions de connexion des bornes électriques positive (14) et négative (16) non connectées étant obstruées par un organe de sécurité (20).

13. Procédé de mise en sécurité d'un ensemble de batteries (12), chacune comprenant un dispositif de sécurité (19) pour une batterie (12) comprenant une borne électrique positive (14) et une borne électrique négative (16) adaptées à être connectées chacune à un connecteur électrique (18), la batterie (12) étant adaptée pour qu'un connecteur électrique (18) puisse être connecté à chacune des bornes électriques positive (14) et négative (16) selon une première (A+, A-) ou une deuxième (B+, B-) position de connexion, le dispositif de sécurité (19) comprenant un organe de sécurité (20) adapté à être sélectivement positionné dans : - une première position de sécurité dans laquelle l'organe de sécurité (20) empêche la connexion d'un connecteur électrique (18) dans la deuxième position de connexion (B+) de la borne électrique positive (14) et dans la première position de connexion (A-) de la borne électrique négative (16) ; ou
- une deuxième position de sécurité dans laquelle l'organe de sécurité (20) empêche la connexion d'un connecteur électrique (18) dans la première position de connexion (A+) de la borne électrique positive (14) et dans la deuxième position de connexion (B-) de la borne électrique négative (16), le procédé comprenant les étapes consistant à :
- déterminer les premières (A+, A-) et deuxièmes (B+, B-) positions de connexion aux bornes négative (16) et positive (14) dont la connexion à un connecteur électrique (18) est à empêcher parmi les premières (A+, A-) et deuxièmes (B+, B-) positions de connexion des bornes électriques négative (16) et positive (14) d'une batterie (12) ;
- positionner l'organe de sécurité (20) selon la première ou la deuxième position de sécurité en fonction des premières (A+, A-) et deuxièmes (B+, B-) positions de connexion déterminées.

## Patentansprüche

1. Eine Sicherungsvorrichtung (19) für eine Batterie (12), umfassend ein positives elektrisches Anschlusselement (14) und ein negatives elektrisches Anschlusselement (16) von denen jedes dazu ausgelegt ist an einen elektrischen Verbinder (18) angeschlossen zu werden, wobei die Batterie (12) so ausgelegt ist, dass ein elektrischer Verbinder (18) an ein jedes des positiven (14) und des negativen (16) elektrischen Anschlusselements, gemäß einer ersten (A+, A-) oder einer zweiten (B+, B-) Verbindungsposition angeschlossen werden kann, wobei die Sicherungsvorrichtung (19) **dadurch gekennzeichnet ist, dass** sie einen Sicherheitsabschnitt (20) umfasst, der dazu ausgelegt ist, wie folgt selektiv angeordnet zu werden, in:
- einer ersten Sicherheitsstellung, wobei der Sicherheitsabschnitt (20) die Verbindung eines elektrischen Verbinders (18) in der zweiten Verbindungsposition (B+) des positiven elektrischen Anschlusselements (14) und in der ersten Verbindungsposition (A-) des negativen elektrischen Anschlusselements (16) verhindert; oder
- einer zweiten Sicherheitsstellung, wobei der Sicherheitsabschnitt (20) die Verbindung eines elektrischen Verbinders (18) in der ersten Verbindungsposition (A+) des positiven elektrischen Anschlusselements (14) und in der zweiten Verbindungsposition (B-) des negativen elektrischen Anschlusselements (16) verhindert.

2. Die Sicherungsvorrichtung (19) nach Anspruch 1, wobei der Sicherheitsabschnitt (20) dazu ausgelegt ist, dass er verschiebbar ist um in der ersten oder der zweiten Sicherheitsstellung angeordnet zu sein.

3. Die Sicherungsvorrichtung (19) nach Anspruch 2, wobei der Sicherheitsabschnitt (20) folgendes umfasst:
- einen ersten beweglichen Arm (22) zwischen dem positiven (14) und dem negativen (16) elektrischen Anschlusselement, der dazu ausgelegt ist, die Verbindung eines elektrischen Verbinders (18) in:
• der ersten Verbindungsposition (A+) des positiven elektrischen Anschlusselements (14) zu verhindern und gleichzeitig den Zugang zur ersten Verbindungsposition (A-) des negativen elektrischen Anschlusselements (16) zu erlauben; oder
• der ersten Verbindungsposition (A-) des negativen elektrischen Anschlusselements (16) zu verhindern und gleichzeitig den Zugang zur ersten Verbindungsposition (A+) des positiven elektrischen Anschlusselements (14) zu erlauben; und
- einen zweiten beweglichen Arm (24) zwischen dem positiven (14) und dem negativen (16) elektrischen Anschlusselement, der dazu ausgelegt ist, die Verbindung eines elektrischen Verbinders (18) in:
• der zweiten Verbindungsposition (B+) des positiven elektrischen Anschlusselements (14) zu verhindern und gleichzeitig den Zugang zur zweiten Verbindungsposition (B-) des negativen elektrischen Anschlusselements (16) zu erlauben; oder
• der zweiten Verbindungsposition (B-) des negativen elektrischen Anschlusselements (16) zu verhindern und gleichzeitig den Zugang zur zweiten Verbindungsposition (B+) des positiven elektrischen Anschlusselements (14) zu erlauben.

4. Die Sicherungsvorrichtung (19) nach Anspruch 3, wobei der Sicherheitsabschnitt (20) ebenfalls einen Verbindungsarm (26) umfasst, der einstückig einem jeden der Arme (22) und (24) angeordnet ist, so dass wenn einer des ersten (22) oder des zweiten (24) Arms sich in eine Richtung verschiebt, der andere sich in die umgekehrte Richtung verschiebt.

5. Die Sicherungsvorrichtung (19) nach Anspruch 1, wobei der Sicherheitsabschnitt (20) dazu ausgelegt ist, rotierend bewegt zu werden um in der ersten oder der zweiten Sicherheitsstellung angeordnet zu werden.

6. Die Sicherungsvorrichtung (19) nach Anspruch 5, wobei der Sicherheitsabschnitt (20) folgendes umfasst:
- ein erstes bewegliches Element (28) zwischen der ersten (A+) und der zweiten (B+) Verbindungsposition des positiven elektrischen Anschlusselements (14), das dazu ausgelegt ist, die Verbindung eines elektrischen Verbinders (18) in:
• der ersten Verbindungsposition (A+) des positiven elektrischen Anschlusselements (14) zu verhindern und gleichzeitig den Zugang zur zweiten Verbindungsposition (B+) des positiven elektrischen Anschlusselements (14) zu erlauben; oder
• der zweiten Verbindungsposition (B+) des positiven elektrischen Anschlusselements (14) zu verhindern und gleichzeitig den Zugang zur ersten Verbindungsposition (A+) des positiven elektrischen Anschlusselements (14) zu erlauben; und
- ein zweites bewegliches Element (30) zwischen der ersten (A-) und der zweiten (B-) Verbindungsposition des negativen elektrischen Anschlusselements (16), das dazu ausgelegt ist, die Verbindung eines elektrischen Verbinders (18) in:
• der ersten Verbindungsposition (A-) des negativen elektrischen Anschlusselements (16) zu verhindern und gleichzeitig den Zugang zur zweiten Verbindungsposition (B-) des negativen elektrischen Anschlusselements (16) zu erlauben; oder
• der zweiten Verbindungsposition (B-) des negativen elektrischen Anschlusselements (16) zu verhindern und gleichzeitig den Zugang zur ersten Verbindungsposition (A-) des negativen elektrischen Anschlusselements (16) zu erlauben.

7. Die Sicherungsvorrichtung (19) nach Anspruch 6, wobei das erste (28) und das zweite (30) bewegliche Element durch ein um seine Achse bewegliches Zahnrad gebildet sind, das eine Auspaarung (32) aufweist, die dazu ausgebildet ist an einer der ersten (A+, A-) oder der zweiten (B+, B-) Verbindungsposition angeordnet zu sein um dessen Zugang zur einem elektrischen Verbinder (18) zu ermöglichen.

8. Die Sicherungsvorrichtung (19) nach Anspruch 7, wobei der Sicherheitsabschnitt (20) ferner ein Verbindungselement (34) zwischen dem ersten (28) und dem zweiten (30) beweglichen Element umfasst, wobei das Verbindungselement (34), das durch ein um seine Achse bewegliches Zahnrad gebildet ist, dazu ausgebildet ist durch Ineinandergreifen mit dem ersten (28) und dem zweiten (30) beweglichen Element zusammenzuwirken, so dass eine Drehung in einer Drehrichtung eines des ersten (28) und des zweiten (30) beweglichen Elements, eine Drehrichtungsumkehr des anderen beweglichen Elements bewirkt.

9. Die Sicherungsvorrichtung (19) nach einem der vorangehenden Ansprüche, welche dazu ausgelegt ist, in eine Verbindungswand (15) einer Batterie eingefügt zu werden, die dafür geeignet ist das positive (14) und das negative (16) elektrische Anschlusselement der Batterie (12) abzudecken.

10. Die Sicherungsvorrichtung (19) nach einem der Ansprüche 2, 5 oder 9, wobei der Sicherheitsabschnitt (20) einstückig ist und mindestens zwei Auspaarungen aufweist, die einen gleichzeitigen Zugang zu einem elektrischen Verbinder (50) ermöglichen:
- sei es bei der ersten Verbindungsposition (A+) des positiven elektrischen Anschlusselements (14) und der zweiten Verbindungsposition (B-) des negativen elektrischen Anschlusselements (16);
- sei es bei der zweiten Verbindungsposition (B+) des positiven elektrischen Anschlusselements (14) und der ersten Verbindungsposition (A-) des negativen elektrischen Anschlusselements (16).

11. Eine Batterie (12), umfassend ein positives elektrisches Anschlusselement (14) und ein negatives elektrisches Anschlusselement (16) von denen jedes dazu ausgelegt ist, an einen elektrischen Verbinder (18) angeschlossen zu sein, wobei die Batterie (12) so ausgelegt ist, dass ein elektrischer Verbinder (18) an ein jedes des positiven (14) und des negativen (16) elektrischen Anschlusselements, gemäß einer ersten (A+, A-) oder einer zweiten (B+, B-) Verbindungsposition angeschlossen zu sein, wobei die Batterie, nach einem der vorangehenden Ansprüche ferner eine Sicherungsvorrichtung (19) umfasst.

12. Ein Satz von Batterien (12) nach Anspruch 11, die in Reihenschaltung miteinander verbunden sind, wobei die Batterien lediglich durch einen einzigen elektrischen Verbinder (18) miteinander verbunden sind, und wobei die erste (A+, A-) und die zweite (B+, B-) Verbindungsposition des positiven (14) und des negativen (16) elektrischen Anschlusselements nicht angeschlossen sind da sie durch einen Sicherheitsabschnitt (20) blockiert werden.

13. Ein Verfahren zur Absicherung eines Satzes von Batterien (12), wobei jede davon eine Sicherungsvorrichtung (19) für eine Batterie (12) umfasst, die ein positives elektrisches Anschlusselement (14) und ein negatives elektrisches Anschlusselement (16) umfasst, die dazu ausgelegt sind, jeweils an einem elektrischen Verbinder (18) angeschlossen zu sein, wobei die Batterie (12) so ausgelegt ist, dass ein elektrischer Verbinder (18) an jedes des positiven (14) und des negativen (16) elektrischen Anschlusselements, gemäß einer ersten (A+, A-) oder einer zweiten (B+, B-) Verbindungsposition angeschlossen sein kann, wobei die Sicherungsvorrichtung (19) einen Sicherheitsabschnitt (20) umfasst, der dazu ausgelegt ist, folgenderweise selektiv angeordnet zu sein, in:
- einer ersten Sicherheitsstellung, wobei der Sicherheitsabschnitt (20) die Verbindung eines elektrischen Verbinders (18) in der zweiten Verbindungsposition (B+) des positiven elektrischen Anschlusselements (14) und in der in der ersten Verbindungsposition (A-) des negativen elektrischen Anschlusselements (16) verhindert; oder
- einer zweiten Sicherheitsstellung, wobei der Sicherheitsabschnitt (20) die Verbindung eines elektrischen Verbinders (18) in der ersten Verbindungsposition (A+) des positiven elektrischen Anschlusselements (14) und in der in der zweiten Verbindungsposition (B-) des negativen elektrischen Anschlusselements (16) verhindert,
wobei das Verfahren die folgenden Schritte umfasst:
- Bestimmen der ersten (A+, A-) oder der zweiten (B+, B-) Verbindungspositionen am negativen (16) und am positiven (14) Anschlusselement, dessen Anschluss an einen elektrischen Verbinder (18) unter den ersten (A+, A-) oder der zweiten (B+, B-) Verbindungspositionen des negativen (16) und des positiven (14) Anschlusselements einer Batterie (12) zu vermeiden ist;
- Anordnen des Sicherheitsabschnitts (20) in die erste oder die zweiten Sicherheitsstellung, je nach den ersten (A+, A-) oder den zweiten (B+, B-) bestimmten Verbindungspositionen.

## Claims

1. A safety device (19) for a battery (12) comprising a positive electrical terminal (14) and a negative electrical terminal (16), each being adapted to be connected to an electrical connector (18), the battery (12) being adapted so that an electrical connector (18) can be connected to each of the positive (14) and negative (16) electrical terminals at a first (A+, A-) or a second (B+, B-) connection position, the safety device (19) being **characterized in that** it includes a safety member (20) adapted to be selectively positioned in:
- a first safety position wherein the safety member (20) prevents the connection of an electrical connector (18) in the second connection position (B+) of the positive electrical terminal (14) and in the first connection position (A-) of the negative electrical terminal (16); or
- a second safety position wherein the safety member (20) prevents the connection of an electrical connector (18) in the first connection position (A+) of the positive electrical terminal (14) and in the second connection position (B-) of the negative electrical terminal (16).

2. The safety device (19) according to claim 1, wherein the safety member (20) is adapted to be moved in translation to be positioned in the first or the second safety position.

3. The safety device (19) according to claim 2, wherein the safety member (20) comprises:
- a first arm (22) movable between the positive (14) and negative (16) electrical terminals adapted to prevent the connection of an electrical connector (18) in:
• the first connection position (A+) of the positive electrical terminal (14) and to simultaneously allow access to the first connection position (A-) of the negative electrical terminal (16); or
• the first connection position (A-) of the negative terminal (16) and to simultaneously allow access to the first connection position (A+) of the positive electrical terminal (14); and
- a second arm (24) movable between the positive (14) and negative (16) electrical terminals adapted to prevent the connection of an electrical connector (18) in:
• the second connection position (B+) of the positive electrical terminal (14) and to simultaneously allow access to the second connection position (B-) of the negative electrical terminal (16); or
• the second connection position (B-) of the negative electrical terminal (16) and to simultaneously allow access to the second connection position (B+) of the positive electrical terminal (14).

4. The safety device (19) according to claim 3, wherein the safety member (20) also comprises a connection arm (26) integral with each of the first (22) and second (24) arms so that when one of the first (22) and second (24) arms translates in one direction, the other translates in the opposite direction.

5. The safety device (19) according to claim 1, wherein the safety member (20) is adapted to be moved in rotation to be positioned in the first or the second safety position.

6. The safety device (19) according to claim 5, wherein the safety member (20) comprises:
- a first element (28) movable between the first (A+) and second (B+) connection positions of the positive electrical terminal (14) adapted to prevent the connection of an electrical connector (18) in:
• the first connection position (A+) of the positive electrical terminal (14) and to simultaneously allow access to the second connection position (B+) of the positive electrical terminal (14); or
• the second connection position (B+) of the positive electrical terminal (14) and to simultaneously allow access to the first connection position (A+) of the positive electrical terminal (14); and
- a second element (30) movable between the first (A-) and second (B-) connection positions of the negative electrical terminal (16) adapted to prevent the connection of an electrical connector (18) in:
• the first connection position (A-) of the negative electrical terminal (16) and to simultaneously allow access to the second connection position (B-) of the negative electrical terminal (16); or
• the second connection position (B-) of the negative electrical terminal (16) and to simultaneously allow access to the first connection position (A-) of the negative electrical terminal (16).

7. The safety device (19) according to claim 6, wherein the first (28) and second (30) movable elements are formed by a gear wheel movable about its axis, including a recess (32) adapted to be positioned at one of the first (A+, A-) and second (B+, B-) connection positions to allow access to an electrical connector (18).

8. The safety device (19) according to claim 7, wherein the safety member (20) also comprises a connection element (34) between the first (28) and second (30) movable elements, the connection element (34) being formed by a gear wheel movable about its axis, adapted to cooperate by meshing with the first (28) and second (30) movable elements so that a rotation in one direction of rotation of one of the first (28) and second (30) movable elements causes a rotation of the other movable element in the opposite direction.

9. The safety device (19) according to any one of the preceding claims, which is adapted to be integrated into a connection wall (15) of a battery capable of covering the positive (14) and negative (16) electrical terminals of the battery (12).

10. The safety device (19) according to one of claims 2, 5 or 9, wherein the safety member (20) is of a single piece and includes at least two recesses allowing simultaneous access to an electrical connector (50):
- either to the first connection position (A+) of the positive electrical terminal (14) and the second connection position (B-) of the negative electrical terminal (16);
- or to the second connection position (B+) of the positive electrical terminal (14) and the first connection position (A-) of the negative electrical terminal (16).

11. A battery (12) comprising a positive electrical terminal (14) and a negative electrical terminal (16), each being adapted to be connected to an electrical connector (18), the battery (12) being adapted so that an electrical connector (18) can be connected to each of the positive (14) and negative (16) electrical terminals in a first (A+, A-) or a second (B+, B-) connection position, the battery also comprising a safety device (19) according to any one of the preceding claims.

12. A set of batteries (12) according to claim 11 interconnected to form a series circuit, wherein the batteries are interconnected only by a single electrical connector (18), the first (A+, A-) and second (B+, B-) connection positions of the positive (14) and negative (16) electrical terminals not connected being obstructed by a safety member (20).

13. A method for making a set of batteries (12) safe, each battery including a safety device (19) for a battery (12) comprising a positive electrical terminal (14) and a negative electrical terminal (16), each being adapted to be connected to an electrical connector (18), the battery (12) being adapted so that an electrical connector (18) can be connected to each of the positive (14) and negative (16) electrical terminals at a first (A+, A-) or a second (B+, B-) connection position, the safety device (19) including a safety member (20) adapted to be selectively positioned in: a first safety position wherein the safety member (20) prevents the connection of an electrical connector (18) in the second connection position (B+) of the positive electrical terminal (14) and in the first connection position (A-) of the negative electrical terminal (16); or a second safety position wherein the safety member (20) prevents the connection of an electrical connector (18) in the first connection position (A+) of the positive electrical terminal (14) and in the second connection position (B-) of the negative electrical terminal (16), the method comprising the steps of:
- determining the first (A+, A-) and second (B+, B-) connection positions to the negative (16) and positive (14) terminals, the connection whereof to an electrical connector (18) is to be prevented from among the first (A+, A-) and second (B+, B-) connection positions of the negative (16) and positive (14) electrical terminals of a battery (12);
- positioning the safety member (20) in the first or the second safety position depending on the first (A+, A-) and second (B+, B-) determined connection positions.
